# EUROPEAN PATENT SPECIFICATION

(11) **EP 2 787 772 B1**
(45) Date of publication and mention of the grant of the patent: **02.08.2017**
(21) Application number: 14162809.9
(22) Date of filing: 31.03.2014
(51) Int. Cl.: H04W 48/16

(54) **Method for connecting short-range communication in electronic device and the electronic device**
Verfahren zum Verbinden von Nahbereichskommunikation in einer elektronischen Vorrichtung und die elektronische Vorrichtung
Procédé de connexion de communication à courte portée dans un dispositif électronique et ledit dispositif

(30) Priority: 02.04.2013 KR 20130035875; 15.01.2014 KR 20140005103
(43) Date of publication of application: 08.10.2014
(73) Proprietor: Samsung Electronics Co., Ltd., Suwon-si Gyeonggi-do 443-742 (KR)
(72) Inventor: Jung, Bu-Seop, Gyeonggi-do 443-742 (KR); Bastin, Edwin Joseph Vimal, Gyeonggi-do 443-742 (KR); Jung, Ji-Hyun, Gyeonggi-do 443-742 (KR)
(74) Representative: HGF Limited

(56) References cited:
- US-A1- 2012 076 118
- Lan/man Standards Committee Of The Ieee Computer Society: "IEEE 802.11u-2011 Part 11: Wireless LAN Medium Access Control (MAC) and Physical Layer (PHY) Specifications - Amendment 9: Interworking with External Networks", , 25 February 2011 (2011-02-25), pages 1-208, XP055032050, Retrieved from the Internet: URL:http://standards.ieee.org/getieee802/d ownload/802.11u-2011.pdf [retrieved on 2012-07-06]

## Description

### BACKGROUND OF THE INVENTION

### Field of the Invention

Certain embodiments of the present invention provide a method for connecting short-range communication and an electronic device for implementing such a method. More particularly, certain embodiments of the present invention provide a method for connecting short-range communication and an electronic device for implementing such a method, in which a speed of connection with an external device may be optimized in the electronic device.

### Description of the Related Art

Various types of Wi-Fi Hotspot network connection techniques are currently available and further such techniques are being developed. One example of a Wi-Fi Hotspot network connection technique is Hotspot 2.0, in which an electronic device capable of performing Wi-Fi communication connects to a Wi-Fi public network without requiring a user's separate input, thereby allowing the electronic device to connect to the Wi-Fi public network with greater ease.

A system for performing one type of Wi-Fi network connection implements a separate network discovery method that allows an electronic device to acquire external network information, and a separate information server that manages and stores the external network information.

For example, in a Hotspot 2.0 system (that is one example of a system for implementing a Wi-Fi network connection), an Access Network Query Protocol (ANQP) for network discovery is implemented and an information server in the form of an ANQP server is provided.

According to the related art, in order for a user to connect to an Access Point (AP) in a Wi-Fi hotspot network, the user typically has to check a list of available or existing APs through a SCAN list and determine from the list of the APs whether the AP is a connectable AP. In addition, in order to connect to a desired AP, a connection setting operation is typically required. As such, an AP is selected through a SCAN list and a connection setting operation performed for connection with the selected AP. Such a technique degrades usability for users who are not familiar with Wi-Fi.

Therefore, a standard, referred to a Hotspot 2.0, has been developed that aims to overcome the above-described disadvantages, and aims at increasing usability of an electronic device, for example a cellular terminal.

Hotspot 2.0 is based on the Institute of Electrical and Electronics Engineers (IEEE) 802.11u standard, and aims to provide improved security by using WPA2-Enterprise security. Future developments of Hotspot 2.0 may also provide various other functions, such as a data off-loading function of a cellular network.

In a Hotspot 2.0 system, an electronic device provides network discovery by using 802.11u-based ANQP. The network discovery operation using ANQP enables the electronic device to check various network information as well as information acquired during a conventional scan operation before connecting to an AP.

An electronic device which supports Hotspot 2.0 performs an ANQP query/response operation, which corresponds to an information exchange operation with the information server after the scan operation for connection with the AP. The foregoing process (e.g., the ANQP query/response operation) may be delayed, for example by up to several seconds, depending on a network state.

In particular, if numerous client terminals exist in a specific hotspot region and at the same time, the ANQP query/response operation is in progress, a delay in connection caused by the ANQP query/response operation may become significantly detrimental.

Upon connecting to a particular AP, the electronic device may store unique identification information for identifying a service provider of the particular AP and network information received through the ANQP query/response operation. Thus, when the electronic device re-connects to the particular AP, the electronic device may skip the ANQP query/response operation to improve the speed of connection with the particular AP.

However, in the entire network information, most network information maintains the same value for service providers, but some network information may have different values for different venues.

Thus, in a situation in which network information exists that needs to be updated for each venue, if the electronic device attempts connection unconditionally without the ANQP query/response operation for re-connection, information exposed to a user is not updated.

However, if the ANQP query/response operation is performed for each venue, the efficiency of the network as well as AP connection speed may be degraded.

A technique for providing advertisement service data in a pre-association state using 802.11u has been developed. This technique provides advertisement service data to an electronic device attempting the AP connection through an Advertisement query/response operation, which is an information exchange operation with an advertisement server prior to the AP connection. Also in this technique, provided advertisement service data differs according to venue, such that in the information exchange operation, the Advertisement query/response operation is performed for each venue. Accordingly, an AP connection delay may occur or a network efficiency may be degraded. The document "Part 11: Wireless LAN Medium Access Control (MAC) and Physical Layer (PHY) Specifications - Amendment 9: Interworking with External Networks" of the 802.11u standard discloses discloses an AP transmitting venue name information associated with a BSS. The above information is presented as background information only to assist with an understanding of the present invention. No determination has been made, and no assertion is made, as to whether any of the above might be applicable as prior art with regard to the present invention.

### SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a method for connecting short-range communication in an electronic device and the electronic device, in which the electronic device selectively performs the information exchange operation with an information server.

Certain embodiments of the present invention provide a method for connecting short-range communication in an electronic device, and the electronic device, in which a speed of connection with an external device is optimized.

In accordance with an aspect of the present invention, there is provided a method for connecting short-range communication in an electronic device as set out by claim 1.

In accordance with another aspect of the present invention, there is provided an electronic device as set out by claim 13.

In certain exemplary embodiments, the controller is further configured to discover at least one external device through a scan operation if external device connection is selected in the electronic device, to check first identification information for identifying a service provider and the second identification information from discovery information received from each of the at least one discovered external device, to classify external devices according to service provider based on the first identification information and classifies the external devices classified according to service provider according to venue based on the second identification information, and to detect a first external device that meets a preset criterion from among the external devices classified according to venue.

In certain exemplary embodiments, the discovery information comprises a beacon frame or probe response frame that is broadcast from the first external device, and the discovery information comprises the first identification information and the second identification information or comprises the first identification information, the second identification information, and server update version information, wherein the first identification information comprises a Homogeneous Extended Service Set Identifier (HESSID) having a particular Medium Access Control (MAC) address among MAC addresses corresponding to all networks provided by the service provider, and wherein the second identification information comprises a particular MAC address among MAC addresses corresponding to service venues of the service provider or an HESSID having a unique ID.

In certain exemplary embodiments, the controller is further configured to detect first identification information for identifying a service provider and second identification information for identifying a service venue of the service provider from the discovery information received from the first external device, and to connect communication with the external device by using network information of the first external device, which is stored in the electronic device, if the detected first identification information and the second identification information exist in the electronic device.

In certain exemplary embodiments, the controller is further configured to receive network information of the first external device from the information server through an information exchange operation with an information server via the first external device, if the detected first identification information does not exist in the electronic device, to update, by addition, profile information of the first external device, which comprises the detected first identification information of the first external device, the detected second identification information of the first external device, and the received network information of the first external device, and to connect communication with the first external device by using the received network information of the first external device.

In certain exemplary embodiments, the controller is further configured to receive network information of the first external device from the information server through an information exchange operation with the information server via the first external device, if the detected first identification information exists and the second identification information does not exist in the electronic device, to associate the detected second identification information of the first external device with the received network information of the first external device to update, by addition, profile information of the first external device, and to connect communication with the first external device by using the received network information of the first external device.

In certain exemplary embodiments, the controller is further configured to detect second identification information from the discovery information received from the first external device, to receive network information of the first external device from the information server through an information exchange operation with an information server via the first external device, if the detected second identification information does not exist in the electronic device, to newly update profile information of the first external device with the detected first identification information of the first external device, the detected second identification information of the first external device, and the received network information of the first external device, and to connect communication with the first external device by using the received network information of the first external device.

In certain exemplary embodiments, the controller is further configured to compare server update version information detected from the discovery information of the first external device with server update version information of profile information of the first external device, which is stored in the electronic device, if the second identification information exists in the electronic device, and to connect communication with the first external device by using the network information of the first external device stored in the electronic device, if the server update version information are the same as each other as a result of the comparison.

In certain exemplary embodiments, the controller is further configured to receive network information of the first external device from the information server through an information exchange operation with an information server via the first external device, if the server update version information are not the same as each other as a result of the comparison, to newly update profile information of the first external device with the detected first identification information of the first external device, the detected second identification information of the first external device, and the received network information of the first external device, and to connect communication with the first external device by using the received network information of the first external device.

In certain exemplary embodiments, the controller is further configured to detect and display advertisement service data from network information received through an information exchange operation with an information server via the first external device and displaying the detected advertisement service data, prior to connection with the first external device, to add second identification information of the first external device to a white list, if the advertisement service data is selected, and to add the second identification information of the first external device to a black list, if the advertisement service data is not selected.

In certain exemplary embodiments, the controller is further configured to discover at least one external device through a scan operation if external device connection is selected in the electronic device, to check the second identification information from discovery information received from each of the at least one discovered external device, to perform the information exchange operation with the information server via an external device corresponding to second identification information included in the black list, if the second identification information included in the black list exists among the second identification information of the respective at least one external device, and to skip the information exchange operation with the information server via the external device corresponding to the second identification information included in the black list, if the second identification information included in the black list exists among the second identification information of the respective at least one external device.

In certain exemplary embodiments, the controller is further configured to perform a scan operation if a Received Signal Strength Indicator (RSSI) of the first external device is less than a threshold when communication with the first external device is in a connection state, to discover external devices having the same first identification information as first identification information of the first external device through the scan operation, to detect external devices having the same second identification information as second identification information of the first external device from among external devices having the same first identification information as first identification information of the first external device, to detect a second external device that meets a preset criterion from among external devices having the same second identification information as second identification information of the first external device, and to connect communication with the second external device by using the network information of the first external device.

In certain exemplary embodiments, the controller is further configured to connect communication with a third external device having the same first identification information as first identification information of the first external device in a new venue, if the first external device moves to the new venue when communication with the first external device is in a connection state, to compare second identification information of the first external device with second identification information of the third external device, to determine whether the second identification information of the third external device exists in the electronic device if the second identification information of the first external device is not the same as the second identification information of the third external device as a result of the comparison, to receive network information of the third external device through an information exchange operation with the information server via the third external device if the second identification information of the third external device does not exist in the electronic device, and to associate the second identification information of the third external device with the network information of the third external device to update, by addition, profile information of a second external device.

Another aspect of the present invention provides a computer program comprising instructions arranged, when executed, to implement a method, system and/or apparatus, in accordance with any one of the above-described aspects. A further aspect of the present invention provides a machine-readable storage storing such a program.

Other aspects, advantages, objects, and salient features of the present invention will become apparent to those skilled in the art from the following detailed description, which, taken in conjunction with the annexed drawings, discloses various exemplary embodiments of the present invention.

### BRIEF DESCRIPTION OF THE DRAWINGS

The above and other aspects, and features and advantages of certain embodiments and aspects of the present invention will be more apparent from the following detailed description when taken in conjunction with the accompanying drawings, in which:
FIG. 1 is a structural diagram illustrating a Wi-Fi Hotspot network system according to various embodiments of the present invention;
FIGS. 2A and 2B are diagrams illustrating an interworking element format according to various embodiments of the present invention;
FIG. 3 is a block diagram illustrating an electronic device according to various embodiments of the present invention;
FIGS. 4A and 4B are flowcharts illustrating a process of connecting short-range communication in an electronic device according to an embodiment of the present invention;
FIG. 5 is a flowchart illustrating a process of connecting short-range communication in an electronic device according to an embodiment of the present invention;
FIG. 6 is a flowchart illustrating a process of connecting short-range communication in an electronic device according to an embodiment of the present invention;
FIGS. 7A and 7B are flowcharts illustrating a process of connecting short-range communication in an electronic device according to an embodiment of the present invention;
FIG. 8 is a flowchart illustrating a process of connecting short-range communication in an electronic device according to an embodiment of the present invention; and
FIG. 9 is a flowchart illustrating a process of connecting short-range communication in an electronic device according to an embodiment of the present invention.

Throughout the drawings, the same or similar reference numerals may be understood to refer to the same or similar parts, features, elements, steps, operations, functions, components, constructions and structures.

### DETAILED DESCRIPTION OF THE EXEMPLARY EMBODIMENTS

The following description of exemplary embodiments of the present invention, with reference to the accompanying drawings, is provided to assist in a comprehensive understanding of the present invention, as defined by the claims. The description includes various specific details to assist in that understanding, but these are to be regarded as merely exemplary. Accordingly, those of ordinary skill in the art will recognize that various changes and modifications of the various embodiments described herein can be made without departing from the scope of the present invention.

Detailed descriptions of well-known functions, operations, processes, features, elements, structures and constructions may be omitted for clarity and conciseness, and to avoid obscuring the subject matter of the present invention.

The terms and words used in the following description and claims are not limited to the bibliographical meanings, but are merely used to enable a clear and consistent understanding of the present invention. Accordingly, it should be apparent to those skilled in the art that the following description of various exemplary embodiments of the present invention is provided for illustration purpose only and not for the purpose of limiting the present invention as defined by the appended claims.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

It is to be understood that, throughout the description and claims of this specification, the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

An electronic device according to various embodiments of the present invention may be a device having a communication function. For example, the electronic device may include at least one of a smart phone, a tablet Personal Computer (PC), a mobile phone, a video phone, an electronic (e-)book reader, a desktop PC, a laptop PC, a netbook computer, a Personal Digital Assistant (PDA), a Portable Multimedia Player (PMP), an MP3 player, mobile medical equipment, a camera, a wearable device (for example, a Head-Mounted Device (HMD) such as electronic glasses), an electronic cloth, an electronic bracelet, an electronic necklace, an electronic appcessory, an electronic tattoo, and a smart watch.

According to some embodiments, the electronic device may be a smart home appliance having a communication function. The smart home appliance may include, for example, a Television (TV), a Digital Video Disk (DVD) player, audio equipment, a refrigerator, an air conditioner, a vacuum cleaner, an oven, a microwave oven, a laundry machine, an air cleaner, a set-top box, a TV box (for example, HomeSyncTM of Samsung, TVTM of Apple, or TVTM of Google), a game console, an electronic dictionary, an electronic key, a camcorder, and an electronic frame.

According to some embodiments, the electronic device may include at least one of various medical equipment (for example, Magnetic Resonance Angiography (MRA), Magnetic Resonance Imaging (MRI), Computed Tomography (CT), an imaging device, or an ultrasonic device), a navigation system, a Global Positioning System (GPS) receiver, an Event Data Recorder (EDR), a Flight Data Recorder (FDR), a vehicle infotainment device, a ship electronic device (for example, ship navigation system and gyro compass), an avionic device, a security device, a vehicle head unit, an industrial or home robot, an Automatic Teller Machine (ATM) of a financial institution, and a Point of Sale (POS) of a shop.

According to some embodiments, the electronic device may include a part of a furniture or building/structure having a communication function, an electronic board, an electronic signature receiving device, a projector, and various measuring instruments (for example, a water, electricity, gas, or electric wave measuring device). The electronic device according to various embodiments of the present invention may be one of the above-listed devices or a combination thereof. The electronic device according to various embodiments of the present invention may be a flexible device. It will be obvious to those of ordinary skill in the art that the electronic device according to various embodiments of the present invention is not limited to the above-listed devices.

Hereinafter, an electronic device according to various embodiments of the present invention will be described with reference to the accompanying drawings. The term "user" used in the various embodiments may indicate a person who uses the electronic device or a device (e.g., an artificial intelligence electronic device) which uses the electronic device.

In various embodiments of the present invention, short-range communication may include a Wi-Fi communication network capable of supporting Hotspot 2.0 in which network change is automatically performed from a mobile communication network to a Wi-Fi communication network. In various embodiments of the present invention, an external device may be described as an Access Point (AP).

While a description will be made of an information exchange operation, ANQP query/response, with an information server that provides network information of the AP in various embodiments of the present invention, an information exchange operation, Advertisement query/response, with an advertisement server that provides advertisement service data may also be performed in the same manner as the information exchange operation with the information server.

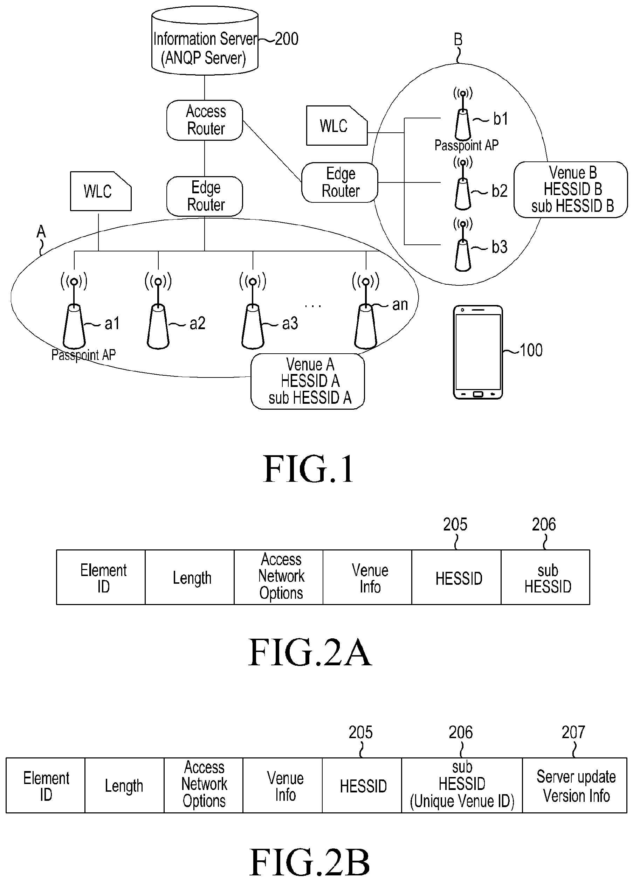

FIG. 1 is a structural diagram illustrating a Wi-Fi Hotspot network system according to various embodiments of the present invention. Referring to FIG. 1, Wi-Fi Hotspot 2.0 network service provisioning is described as an example in which some APs (e.g., APs a1 - an) among a plurality of APs a1 - an and b1 - b3, which are provided by the same service provider, are located in a venue "A" and some other APs are located in a venue "B".

Referring to FIG. 1, upon receiving a beacon frame or probe response frame as discovery information (or search information) from the plurality of APs a1 - an and b1 - b3 that support Hotspot 2.0 through a scan operation for Wi-Fi connection, an electronic 100 checks an Homogeneous Extended Service Set Identifier (HESSID) that is first identification information for identifying a service provider and a sub HESSID that is second identification information for identifying a service venue of the service provider from an interworking element included in the beacon frame or the probe response frame.

When a particular AP that meets (e.g., satisfies) a preset criterion (e.g., if the particular AP has the highest Received Signal Strength Indicator (RSSI)) among the plurality of APs is selected, the electronic device 100 recognizes each service venue of the service provider from the second identification information of the particular AP, determines whether to perform an information exchange operation for receiving network information of the particular AP with an information server 200, depending on whether the second identification information exists in the electronic device 100. Thereafter, the electronic device 100 may connect to the particular AP.

The plurality of APs a1 - an and b1 - b3 may broadcast a beacon frame or a probe response frame as discovery information. In an interworking element of the beacon frame or the probe response frame, the HESSID that is the first identification information for identifying the service provider, is stored and the sub HESSID that is the second identification information for identifying the service venue of the service provider is additionally stored.

The first identification information may include an HESSID having a particular Medium Access Control (MAC) address among MAC addresses corresponding to all networks provided by the service provider.

A Homogeneous Extended Service Set Identifier (HESSID) uses one Medium Access Control (MAC) address of Basic Service Set Identifications (BSSIDs) of an AP of a public network configured by a hotspot service provider, and is a globally unique value. The electronic device may identify (e.g., determine) a service provider through the HESSID.

The second identification information may include a particular MAC address among MAC addresses corresponding to service venues of the service provider. Thus, the first identification information and the second identification information may be the same HESSID or different HESSIDs.

A unique ID for identifying a service venue provided by the service provider may be stored in the second identification information. If the second identification information has the unique ID, an arbitrary unique value, which is not "0", may be stored.

FIGS. 2A and 2B are diagrams illustrating a format of the interworking element according to various embodiments of the present invention.

As to a format of the interworking element as illustrated in FIG. 2A, the interworking element included in a format of the beacon frame or the probe response frame may include a field 205 in which the HESSID that is the first identification information for identifying the service provider is stored and a field 206 in which the sub HESSID that is the second identification information for identifying a service venue of the service provider is stored. In the sub HESSID, which is the second identification information stored in the field 206, a MAC address or a unique ID may be stored.

Thus, in a beacon frame or a probe response frame provided by the APs a1 - an located in the service venue "A" among the plurality of APs a1 - an and b1 - b3, for example, the first identification information, "HESSID A" may be stored in the field 205 and the second identification information, "sub HESSID A" may be stored in the field 206.

In a beacon frame or a probe response frame provided by the APs a1 - an located in the service venue "B" among the plurality of APs a1 - an and b1 - b3, for example, the first identification information, "HESSID B" may be stored in the field 205 and the second identification information, "sub HESSID B" may be stored in the field 206.

As to a format of the interworking element as illustrated in FIG. 2B, the interworking element included in a format of the beacon frame or the probe response frame may include a field 205 in which the HESSID that is the first identification information for identifying the service provider is stored, a field 206 in which the sub HESSID that is the second identification information for identifying a service venue of the service provider is stored, and a field 207 in which update version information of an information server (or server update version information) is stored.

In the field 207, server update version information for an information server of an AP that broadcasts the beacon frame or the probe response frame may be stored.

In various embodiments of the present invention, it is described as an example that the first identifier and the second identifier as illustrated in FIG. 2A or the first identifier, the second identifier, and the server update version information as illustrated in FIG. 2B are stored in the interworking element of the beacon frame or the probe response frame.

However, the first identifier and the second identifier as illustrated in FIG. 2A or the first identifier, the second identifier, and the server update version information as illustrated in FIG. 2B may be included in a particular element among various elements included in the beacon frame or the probe response frame.

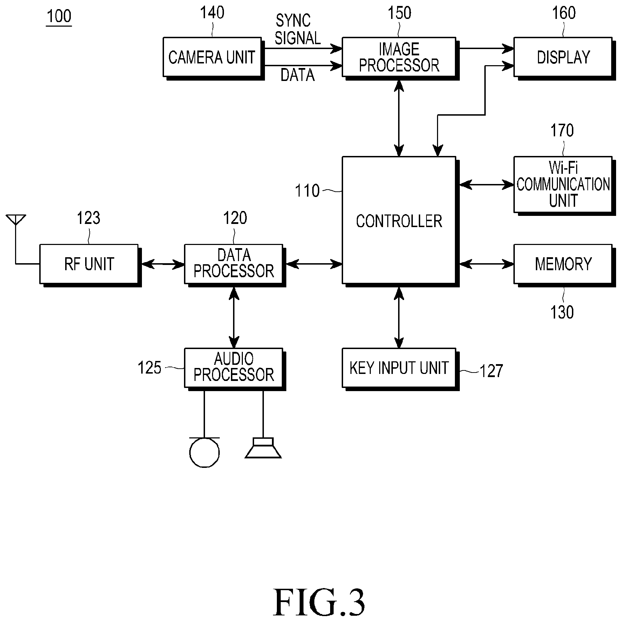

FIG. 3 is a block diagram illustrating an electronic device according to various embodiments of the present invention.

Referring to FIG. 3, the electronic device 100 may include a controller 110, a data processor 120, a Radio Frequency (RF) unit 123, an audio processor 125, a key input unit 127, a memory 130, a camera unit 140, an image processor 150, a display 160, and a Wi-Fi communication unit 170.

According to various embodiments of the present invention, the Radio Frequency (RF) unit 123 includes an RF transmitter (not illustrated) for up-converting a frequency of a transmission signal and amplifying the up-converted transmission signal and an RF receiver (not illustrated) for low-noise-amplifying a received signal and downconverting a frequency of the low-noise-amplified signal.

According to various embodiments of the present invention, the data processor 120 includes a transmitter for encoding and modulating the transmission signal and a receiver for demodulating and decoding the received signal. For example, the data processor 120 may include a modem and a codec. Herein, the codec includes a data codec for processing packet data and an audio codec for processing an audio signal such as voice.

According to various embodiments of the present invention, the audio processor 125 plays an audio signal being output from the audio codec of the data processor 120 or transmits an audio signal generated from a microphone to the audio codec of the data processor 120.

According to various embodiments of the present invention, the key input unit 127 includes keys for inputting numeric and character information and function keys for setting various functions.

According to various embodiments of the present invention, the memory 130 may include program and data memories. The program memory may store programs for controlling general operations of the electronic device 100 and programs for selectively performing an information exchange operation with an information server according to various embodiments of the present invention. The data memory temporarily stores data generated during execution of the programs.

The memory 130 may store profile information for each of at least one AP according to various embodiments of the present invention. The profile information for each AP may include first identification information HESSID, at least one second identification information sub HESSID, network information of the AP, and/or the like. The same service provider may provide a service in a plurality of venues, such that single first identification information HESSID may provide at least one second identification information sub HESSID therein. Therefore, at least one second identification information sub HESSID may be stored in profile information of an AP.

The profile information of each AP may include first identification information HESSID, at least one second identification information sub HESSID, network information of the AP, server update version information, and/or the like.

If network information of a particular AP is received from an information server through the information exchange operation with the information server according to various embodiments of the present invention, then the memory 130 may store profile information of the particular AP, which includes first identification information HESSID of the particular AP, second identification information sub HESSID of the particular AP, network information of the particular AP, and/or the like.

The memory 130 may store a white list that stores second identification information with which the information exchange operation may be performed (e.g., with which information exchange operation is permitted) and a black list that stores second identification information with which the information exchange operation is not performed (e.g., with which information exchange is not permitted).

According to various embodiments of the present invention, the network information of an AP stored in the memory 130 may include the following information, and the information included in the network information may also be extended with development of various use cases.
*3GPP Cellular Network Information
Network Access Identifier (NAI) Realm List
Roaming Consortium List
Domain Name List
Venue Name Information
Operator Friendly Name
Internet Protocol (IP) Address Type Availability Information
Wide Area Network (WAN) Metrics
Connection Capability
Operating Class Indication
Network Authentication Type Information

According to various embodiments of the present invention, the above network information may be entirely received through a complete information exchange operation with the information server.

Among the foregoing network information, Venue Name Information may further indicate currently used Hotspot 2.0 information, and has a different value for a different venue. IP Address Type Availability Information indicates whether a router, a Dynamic Host Configuration Protocol (DHCP) server, an IP version, or a firewall connected to an AP that supports Hotspot 2.0 (or Hotspot 2.0 AP) is used, and may vary with a venue. WAN Metrics indicates WAN link information (downlink speed and load or uplink speed and load) connected to a Hotspot 2.0 AP, and may have a different WAN link attribute for a different venue. Connection Capability indicates communication protocol and port supported in Hotspot 2.0, and types of communication protocol and port may vary with a venue.

Thus, according to various embodiments of the present invention, venue-related network information received through a partial exchange operation with the information server may include Venue Name Information, IP Address Type Availability Information, WAN Metrics, and Connection Capability.

The venue-related network information received through the partial exchange operation is not limited to the foregoing information, and the information included in the venue-related network information may also be extended with development of various use cases.

A controller 110 controls the overall operation of the electronic device 100.

The controller 110 detects second identification information for identifying a service venue of a service provider from discovery information received from a first external device, and connects communication with the first external device through a short-range communication unit by using network information of the first external device, which is stored in the electronic device, if the detected second identification information exists in the electronic device.

According to various embodiments of the present invention, the controller 110 discovers (or searches for) at least one external device through a scan operation if external device connection of the electronic device 100 is selected, and checks the first identification information for identifying a service provider and the second identification information from discovery information received from each of the at least one discovered external device. The controller 110 classifies external devices according to service provider based on the first identification information, classifies the external devices classified according to service provider according to venue based on the second identification information, and detects a first external device that meets (satisfies) a preset criterion from among the external devices classified according to venue.

According to various embodiments of the present invention, the controller 110 detects first identification information for identifying a service provider and second identification information for identifying a service venue of the service provider from the discovery information received from the first external device. The controller 110 connects communication with the external device by using network information of the first external device stored in the electronic device 100, without the information exchange operation with the information server, if the detected first identification information and second identification information exist in the electronic device 100.

According to various embodiments of the present invention, the controller 110 receives the network information of the first external device from the information server through the information exchange operation with the information server via the first external device, if the detected first identification information does not exist in the electronic device 100. The controller 110 updates by addition in the electronic device 100, profile information of the first external device, which includes the detected first identification information of the first external device, the detected second identification information of the first external device, and the received network information of the first external device. The controller 110 may connect communication with the first external device by using the received network information of the first external device.

According to an embodiment of the present invention, if the detected first identification information exists in the electronic device 100, but the second identification does not exist in the electronic device 100, then the controller 110 receives the network information of the first external device from the information server through the information exchange operation with the information server via the first external device. The controller 110 associates the detected second identification information of the first external device with the received network information of the first external device. As an example, the controller 110 may update the profile information of the first external device by adding the second identification information to profile information of the first external device. The controller 110 connects communication with the first external device by using the received network information of the first external device.

According to another embodiment of the present invention, the controller 110 detects second identification information from the discovery information received from the first external device, and receives network information of the first external device from the information server through the information exchange operation with the information server via the first external device, if the detected second identification information does not exist in the electronic device 100. The controller 110 newly updates the profile information of the first external device with the detected first identification information of the first external device, the detected second identification information of the first external device, and the received network information of the first external device. The controller 110 connects communication with the first external device by using the received network information of the first external device.

According to another embodiment of the present invention, if the second identification information exists in the electronic device 100, the controller 110 compares server update version information, detected from the discovery information of the first external device, with server update version information included in profile information of the first external device, which is stored in the electronic device 100. If the server update version information detected from the discovery information of the first external device is the same as the server update version information stored in the electronic device 100, then the controller 110 connects communication with the first external device by using the network information of the first external device, which is stored in the electronic device 100. However, if the server update version information detected from the discovery information of the first external device is not the same as the server update version information stored in the electronic device 100, then the controller 110 receives the network information of the first external device from the information server through the information exchange operation with the information server via the first external device, and newly updates the profile information of the first external device with the detected first identification information of the first external device, the detected second identification information of the first external device, and the received network information of the first external device. The controller 110 connects communication with the first external device by using the received network information of the first external device.

According to another embodiment of the present invention, the controller 110 detects and displays advertisement service data from network information received through the information exchange operation with the information server via the first external device, prior to connection with the first external device. If the advertisement service data is selected, then the controller 110 adds the second identification information of the first external device to a white list, and unless the advertisement service data is selected, the controller 110 adds the second identification information of the first external device to a black list.

According to another embodiment of the present invention, if external device connection is selected in the electronic device 100, then the controller 110 discovers at least one external device through a scan operation and checks the second identification information from discovery information received from each of the at least one discovered external device. If the second identification information included in the white list exists among the second identification information of the at least one respective external device, then the controller 110 performs the information exchange operation with the information server through an external device corresponding to the second identification information included in the white list. However, if the second identification information included in the black list exists among the second identification information of the at least one respective external device, then the controller 110 skips the information exchange operation with the information server through the external device corresponding to the second identification information included in the black list.

According to another embodiment of the present invention, when communication with the first external device is connected, if an RSSI of the first external device becomes lower than a threshold, then the controller 110 performs a scan operation. The controller 110 discovers external devices having the same first identification information as that of first external device through the scan operation, and detects external devices having the same second identification information as that of the first external device from among the external devices having the same first identification information as that of the first external device. The controller 110 detects a second external device that meets a preset criterion (e.g., a second external device having the highest RSSI) from among the external devices having the same second identification information as that of the first external device. The controller 110 connects communication with the second external device by using network information of the first external device.

According to another embodiment of the present invention, when communication with the first external device is connected, if the external device moves to a new venue, then the controller connects communication with a third external device having the same first identification information as that of the first external device in the new venue. The controller 110 compares second identification information of the first external device with second identification information of the third external device. As a result of the comparison, if the second identification information of the first external device is not the same as the second identification information of the third external device, then the controller 110 determines whether the second identification information of the third external device exists in the electronic device 100. If the second identification information of the third external device does not exist in the electronic device 100, then the controller 110 receives network information of the third external device through the information exchange operation with the information server via the third external device. The controller 110 associates the second identification information of the third external device with the network information of the third external device to update the profile information of the second external device by addition.

A camera unit 140 includes a camera sensor for capturing image data and converting the captured optical signal into an electrical signal, and a signal processor for converting an analog image signal captured by the camera sensor into digital data. According to various embodiments of the present invention, the camera sensor may be a Charge-Coupled Device (CCD) sensor, Complementary Metal Oxide Semiconductor (CMOS) sensor, or the like, and the signal processor may be implemented by a Digital Signal Processor (DSP). The camera sensor and the signal processor may be implemented in an integrated manner or in a separated manner.

An image processor 150 performs Image Signal Processing (ISP) for displaying image signals output from the camera unit 140 on a display 160, and the ISP performs functions such as gamma correction, interpolation, spatial variation, image effects, image scaling, Automatic White Balance (AWB), Automatic Exposure (AE), Automatic Focusing (AF), and the like. The image processor 150 processes the image signals output from the camera unit 140 on a frame basis, and outputs the frame-based image data according to the characteristics and size of the display 160. The image processor 150, which includes a video codec, compresses frame image data displayed on the display 160 by preset coding, and restores (or decompresses) the compressed frame image data into its original frame image data. The video codec may include a Joint Photographic Experts Group (JPEG) codec, Moving Picture Experts Group (MPEG)-4 codec, Wavelet codec, and the like. Assuming that the image processor 150 includes an On-Screen Display (OSD) function, the controller 110 may control the image processor 150 to output OSD data according to the size of a screen on which the data is displayed.

The display 160 displays an image output from the image processor 150 and user data output from the controller 110 on a screen. The display 160 may include a Liquid Crystal Display (LCD) or the like. The display 160 may control a controller, a memory, and a panel. For example, if the display 160 includes an LCD, the display 160 includes an LCD controller, a memory for storing image data, and an LCD panel. According to various embodiments of the present invention, the display 160 may be configured to include an input unit. For example, if the LCD functions as an input unit by being implemented in a touch screen scheme, the LCD may serve as an input unit with a touch screen, and in this case, the display unit 160 may display the alphanumeric keys of the key input unit 127.

If the display 160 is used as a touch screen when the display 160 is implemented in a touch screen scheme, the touch screen is configured with a sensor for detecting a touch to the touch screen. For example, the touch screen may be configured with a Touch Screen Panel (TSP) including a plurality of sensor panels that include a capacitive sensor panel capable of recognizing a hand touch and an electro-magnetic induction sensor panel capable of detecting a fine touch such as a touch pen, or the like. According to various embodiments of the present invention, the display 160 may also display a venue in which an AP that currently supports Wi-Fi communication is located and a supportable service as a UI, depending on the network information corresponding to the second identification information, in a Wi-Fi communication mode.

A Wi-Fi communication unit 170 is a short-range wireless communication unit, and may be connected with a Hotspot 2.0 AP.

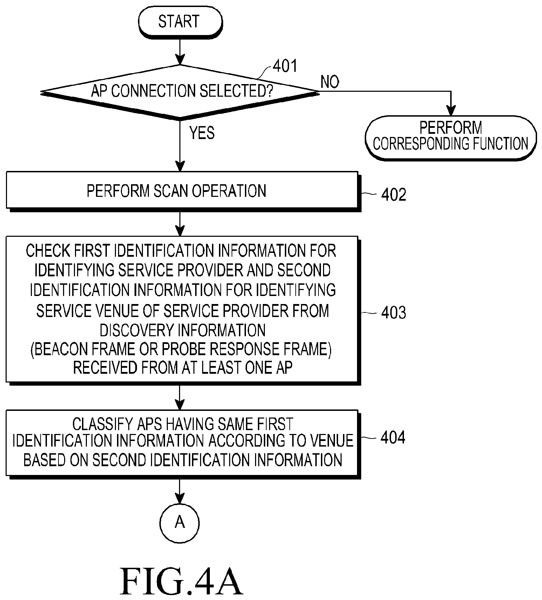

A short-range wireless communication connection operation performed in the above-described electronic device 100 will be described in detail with reference to FIGS. 4A through 5.

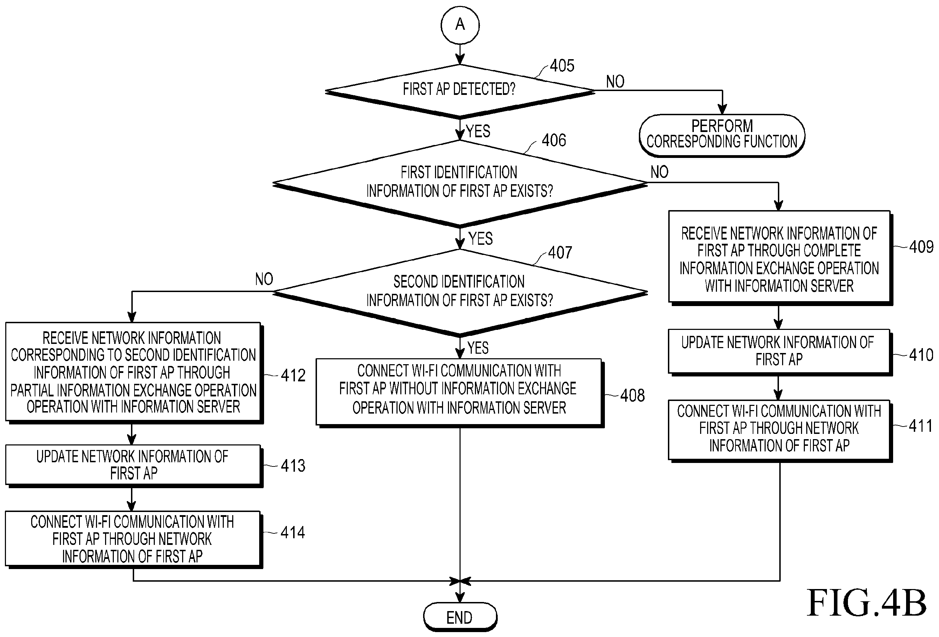

FIGS. 4A and 4B are flowcharts illustrating a process of connecting short-range communication in an electronic device according to an embodiment of the present invention.

Hereinafter, the first embodiment of the present invention will be described in detail also referring to FIGS. 1 through 3.

Referring to FIGS. 4A and 4B, at operation 401, the controller 110 determines whether AP connection is selected.

If the controller 110 determines that the AP connection is not selected at operation 401, then the controller may perform a corresponding function.

In contrast, if the controller determines that AP connection is selected by the user at operation 401, then the controller 110 may proceed to operation 402 at which the controller 110 performs a scan operation for discovering a neighboring AP.

If at least one APs are discovered through the scan operation, then at operation 403 the controller 110 checks first identification information HESSID for identifying a service provider and second identification information sub HESSID for identifying a service venue of the service provider from a beacon frame or a probe response frame that is discovery information received from each of the at least one discovered APs.

At operation 404, the controller 110 classifies the at least one APs according to service provider based on the first identification information and classifies the at least one APs classified according to service provider according to venue based on the second identification information.

The controller 110 selects the best AP for performing an information exchange operation with the information server 200 from among the APs corresponding to the same service provider classified according to venue. To select the best AP, the controller 110 may select an AP that meets a preset condition, for example, an AP having the lowest Basic Service Set (BSS) load, an AP having the highest RSSI, or the like, as the best AP from among the APs corresponding to the same service provider classified according to venue.

A beacon frame or a probe response frame broadcasted as discovery information by Hotspot 2.0 APs includes a BSS load element. The BSS load element includes information such as the number of electronic devices connected to a corresponding AP and a currently used rate of a channel, and provides information for determining an extent to which a BSS currently configured by the AP is crowded. If the APs do not support the BSS load element, an RSSI is detected from the beacon frame or the probe response frame received from each of the APs, and an AP having the highest RSSI may be selected as the best AP.

At operation 405, the controller 110 determines whether a first AP is detected.

If the controller 110 determines that a first AP is not detected at operation 405, then the controller 110 may perform a corresponding function.

In contrast, if the controller 110 determines that the first AP is detected at operation 405, then the controller 110 may proceed to operation 406. For example, the controller 110 detects a first AP as the best AP according to the preset condition from among the APs corresponding to the same service provider classified according to venue. Once the first AP is detected at operation 405, the controller 110 proceeds to operation 406 at which the controller 110 determines whether first identification information of the first AP exists in the memory 130.

If the controller 110 determines that first identification information HESSID A of the first AP exists in the memory 130 at operation 406, then the controller 110 may proceed to operation 407 at which the controller 110 determines whether second identification information sub HESSID A of the first AP exists in the memory 130.

If the controller 110 determines that the second identification information sub HESSID A of the first AP exists in the memory 130 at operation 407, then the controller 110 may proceed to operation 408 at which the controller 110 connects Wi-Fi communication with the first AP by using network information corresponding to the first AP, which is stored in the memory 130, without the information exchange operation with the information server 200.

At operation 408, the controller 110 connects Wi-Fi communication with the first AP, by using network information corresponding to the first identification information HESSID A and network information corresponding to the second identification information sub HESSID A among network information of the first AP.

As at operations 406 to 408, in profile information of the first AP, which is stored in the memory 130 and includes first identification information HESSID, at least one second identification information sub HESSID, and network information of the first AP, the first identification information HESSID A and the second identification information sub HESSID A exist. Therefore, without the information exchange operation with the information server 200 via the first AP, the controller 110 may connect Wi-Fi communication with the first AP by using the network information of the first AP stored in the profile information of the first AP.

However, if the controller 110 determines that the first identification information HESSID A of the first AP does not exist in the memory 130 at operation 406, then the controller 110 may proceed to operation 409 at which the controller 110 determines minimum connection with the first AP and receives the entire network information of the first AP through a complete information exchange operation with the information server 200.

At operation 410, the controller 110 newly updates the network information of the first AP received at operation 409 as the profile information of the first AP in the memory 130, together with the first identification information HESSID A and the second identification information sub HESSID A for the first AP, which are detected in the beacon frame or the probe response frame received from the first AP .

At operation 411, the controller 110 connects Wi-Fi communication with the first AP by using the network information of the first AP updated at operation 410.

As at operations 409 to 411, when attempting initial connection with the first AP, the controller 110 receives the network information of the first AP through the information exchange operation with the information server 200 via the first AP. The controller 110 newly updates, by addition, the network information of the first AP received from the information server 200, as the profile information of the first AP in the memory 130, together with the first identification information HESSID A and the second identification information sub HESSID A for the first AP. The controller 110 associates venue-related network information among the network information of the first AP received from the information server 200 with the second identification information sub HESSID A to store the network information in the profile information of the first AP.

If the controller 110 determines that the second identification information sub HESSID A does not exist in the profile information of the first AP stored in the memory 130 at operation 407, then the controller 110 may proceed to operation 412 at which the controller 110 performs a partial information exchange operation with the information server 200 via the first AP. At operation 412, the controller 110 may receive network information corresponding to the second identification information HESSID A of the first AP, as venue-related network information among the network information of the first AP, through the information exchange operation with the information server 200.

Although the controller 110 receives the network information corresponding to the second identification information sub HESSID A of the first AP through the partial information exchange operation at operation 412, the controller 110 may also receive the entire network information for the first AP through a complete information exchange operation with the information server 200.

At operation 413, the controller 110 associates the second identification information sub HESSID A and the network information corresponding to the second identification information sub HESSID A received through the partial information exchange operation with the profile information of the first AP stored in the memory 130 to update the stored profile information of the first AP by addition.

If the controller 110 receives the network information of the first AP through the complete information exchange operation, then the controller 110 newly updates the network information of the first AP included in the profile information of the first AP stored in the memory 130 with the received network information of the first AP at operation 413. The controller 110 associates venue-related network information among the network information of the first AP with the second identification information sub HESSID A to store the network information in the profile information of the first AP.

At operation 414, the controller 110 connects Wi-Fi communication with the first AP by using the network information of the first AP updated at operation 413.

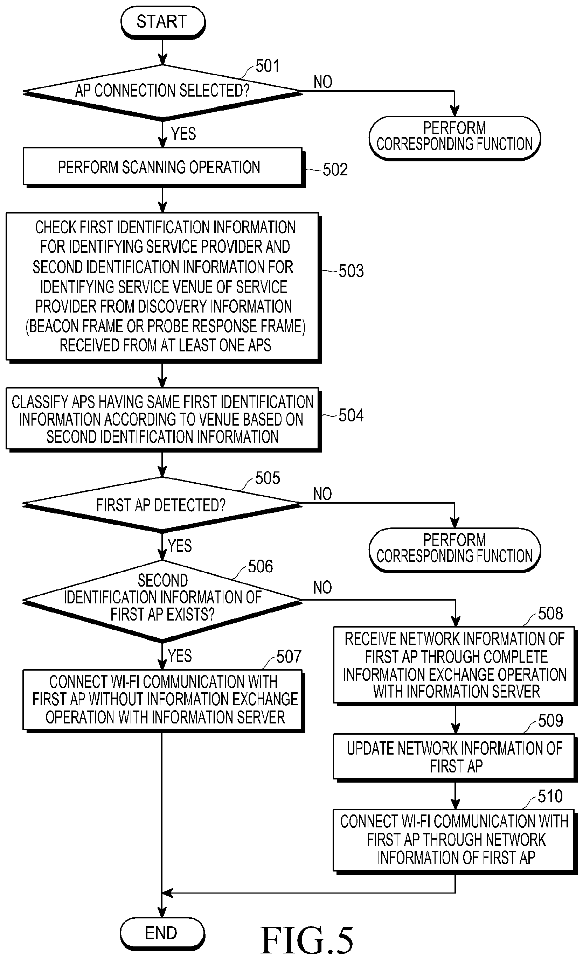

FIG. 5 is a flowchart illustrating a process of connecting short-range communication in an electronic device according to another embodiment of the present invention.

Hereinafter, the embodiment of the present invention will be described in detail also with reference to FIGS. 1 to 3.

Referring to FIG. 5, at operation 501, the controller 110 determines whether an AP connection is selected.

If the controller 110 determines that an AP connection is not selected at operation 501, then the controller 110 may perform a corresponding function.

In contrast, if the controller 110 determines that AP connection is selected by the user at operation 501, then the controller 110 may proceed to operation 502 at which the controller 110 performs a scan operation for discovering a neighboring AP.

If at least one APs are discovered through the scan operation, then at operation 503 the controller 110 checks first identification information HESSID for identifying a service provider and second identification information sub HESSID for identifying a service venue of the service provider from a beacon frame or a probe response frame that is discovery information received from each of the at least one discovered APs.

At operation 504, the controller 110 classifies the APs according to service provider based on the first identification information and classifies the APs classified according to service provider according to venue based on the second identification information.

The controller 110 selects the best AP for performing the information exchange operation with the information server 200 from among the APs corresponding to the same service provider classified according to venue. To select the best AP, the controller 110 may select an AP that meets a preset criterion, for example, an AP having the lowest BSS load, an AP having the highest RSSI, or the like, as the best AP from among the APs corresponding to the same service provider classified according to venue.

At operation 505, the controller 110 determines whether a first AP is detected.

If the controller 110 determines that a first AP is not detected at operation 505, then the controller 110 may perform a corresponding function.

In contrast, if the controller 110 determines that a first AP is detected, for example, if the controller 110 detects a first AP as the best AP according to the preset criterion from among the APs corresponding to the same service provider classified according to venue, then the controller 110 may proceed to operation 506. Once the first AP is detected at operation 505, then the controller 110 may proceed to operation 506 at which the controller 110 determines whether second identification information sub HESSID A of the first AP exists in the memory 130.

If the controller 110 determines that the second identification information HESSID A of the first AP exists in the memory 130 at operation 506, then the controller 110 may proceed to operation 507 at which the controller 110 connects Wi-Fi communication with the first AP by using network information of the first AP stored in the memory 130, without the information exchange operation with the information server 200.

As at operations 506 and 507, in profile information of the first AP which is stored in the memory 130 and includes first identification information HESSID, at least one second identification information sub HESSID, and network information of the first AP, the second identification information sub HESSID A exists. Thus, the controller 110 may connect Wi-Fi communication with the first AP by using the network information of the first AP, without the information exchange operation with the information server 200 via the first AP.

If the controller 110 determines that the second identification information sub HESSID A of the first AP does not exist in the memory 130 at operation 506, then the controller 110 may proceed to operation 508 at which the controller 110 receives the entire network information of the first AP through a complete information exchange operation with the information server 200.

At operation 509, the controller 110 newly updates the network information of the first AP received at operation 508 as the profile information of the first AP in the memory 130, together with the first identification information HESSID A and the second identification information sub HESSID A for the first AP that are detected in the beacon frame or the probe response frame received from the first AP.

If performing a partial information exchange operation at operation 508, the controller 110 updates, by addition, the second identification information sub HESSID A and network information corresponding to the second identification information sub HESSID A, which is received through the partial information exchange operation, in the profile information of the first AP stored in the memory 130.

At operation 510, the controller 110 connects Wi-Fi communication with the first AP by using the network information of the first AP updated at operation 509.

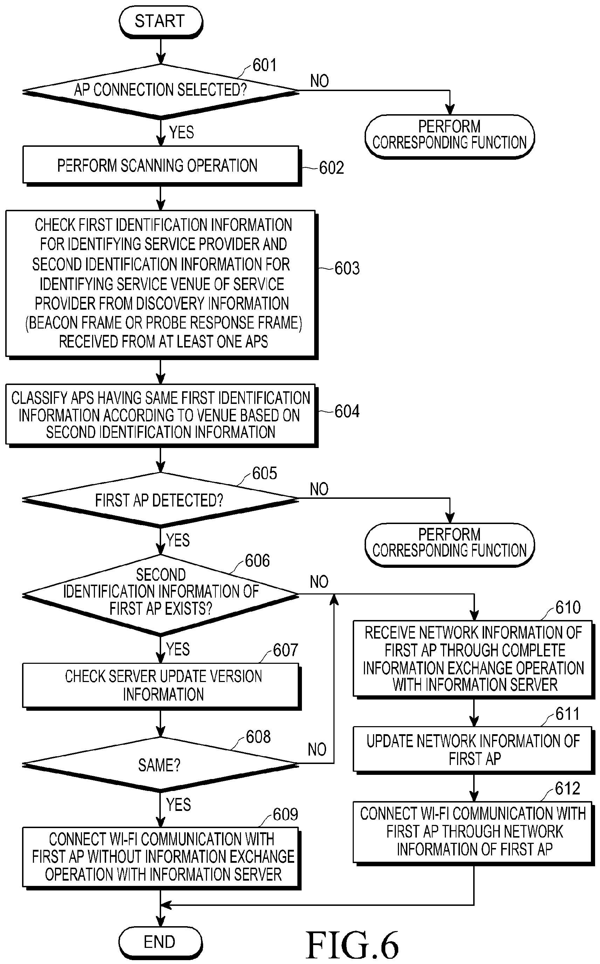

FIG. 6 is a flowchart illustrating a process of connecting short-range communication in an electronic device according to an embodiment of the present invention.

Profile information of an AP according to another embodiment of the present invention may include first identification information, second identification information, server update version information, network information of an AP, and/or the like.

Hereinafter, the current embodiment of the present invention will be described in detail also referring to FIGS. 1 to 3.

Referring to FIG. 6, at operation 601, the controller 110 determines whether an AP connection is selected.

If the controller 110 determines that an AP connection is not selected, then the controller 110 may perform a corresponding function.

In contrast, if the controller 110 determines that AP connection is selected by a user at operation 601, then the controller 110 may proceed to operation 602 at which the controller 110 performs a scan operation for discovering a neighboring AP.

If at least one APs are discovered through the scan operation, then at operation 603, the controller 110 checks first identification information HESSID for identifying a service provider and second identification information sub HESSID for identifying a service venue of the service provider from a beacon frame or probe response frame, which is discovery information received from each of the at least one discovered APs.

At operation 604, the controller 110 classifies the APs according to service provider based on the first identification information and classifies the APs classified according to service provider according to venue based on the second identification information.

The controller 110 selects the best AP for performing an information exchange operation with the information server 200 from among the APs corresponding to the same service provider classified according to venue. To select the best AP, the controller 110 may select an AP that meets a preset condition, for example, an AP having the lowest Basic Service Set (BSS) load, an AP having the highest RSSI, or the like, as the best AP from among the APs corresponding to the same service provider classified according to venue.

At operation 605, the controller 110 determines whether a first AP is detected.

If the controller 110 determines that a first AP is not detected at operation 605, then the controller 110 may perform a corresponding function.

In contrast, if the controller 110 determines that a first AP is detected at operation 605, then the controller 110 may proceed to operation 606. For example, if the controller 110 detects a first AP as the best AP according to the preset condition from among the APs corresponding to the same service provider classified according to venue, then the controller 110 may proceed to operation 606.

Once the first AP is detected at operation 605, the controller 110 may proceed to operation 606 at which the controller 110 determines whether second identification information sub HESSID A of the first AP exists in the memory 130.

If the controller 110 determines that the second identification information HESSID A of the first AP exists in the memory 130 at operation 606, the controller 110 detects server update version information 207 from the beacon frame or probe response frame received from the first AP as illustrated in FIG. 2B.

At operation 607, the controller 110 compares the server update version information detected from the beacon frame or probe response frame received from the first AP with server update version information included in profile information of the first AP stored in the memory 130. For example, at operation 607, the controller 110 checks the server update version information.

At operation 608, the controller 110 determines whether the server update version information detected from the beacon frame or probe response frame received from the first AP with server update version information included in profile information of the first AP stored in the memory 130 are the same.

As a result of the comparison, if the controller 110 determines that the server update version information are the same as each other at operation 608, then the controller 110 may proceed to operation 609 at which the controller 110 connects Wi-Fi communication with the first AP by using network information corresponding to the first AP, which is stored in the memory 130, without the information exchange operation with the information server 200.

At operations 607 to 609, in profile information of the first AP, which includes first identification information HESSID, at least one second identification information sub HESSID, server update version information, and network information of the first AP, the second identification information sub HESSID A and the same server update version information exist. Thus, the controller 110 may connect Wi-Fi communication with the first AP, by using the network information of the first AP, without the information exchange operation with the information server 200 via the first AP.

If the controller 110 determines that the second identification information sub HESSID A of the first AP does not exist in the memory 130 at operation 606 or if the controller 110 determines that the server update version information are not the same as each other at operation 608, then the controller 110 may proceed to operation 610 at which the controller 110 receives the entire network information of the first AP through a complete information exchange operation with the information server 200.

At operation 611, the controller 110 updates network information of the first AP.

At operation 612, the controller 110 connects Wi-Fi communication with the first AP by using the network information of the first AP updated at operation 611.

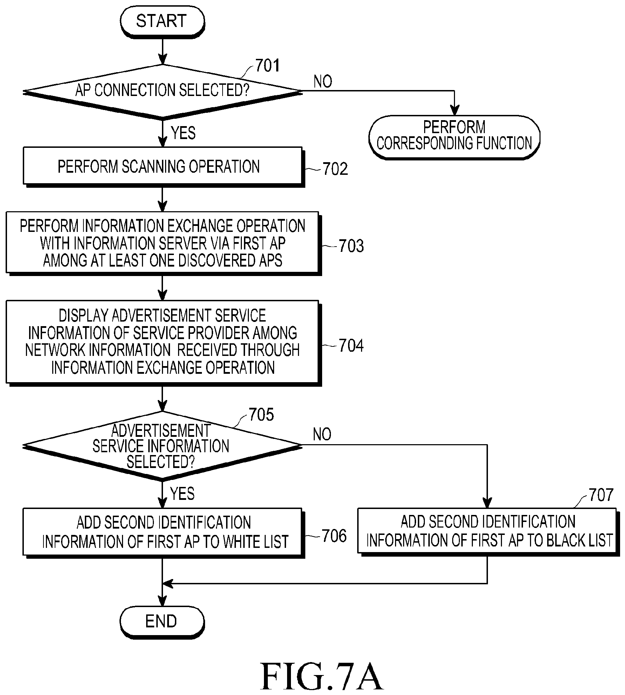

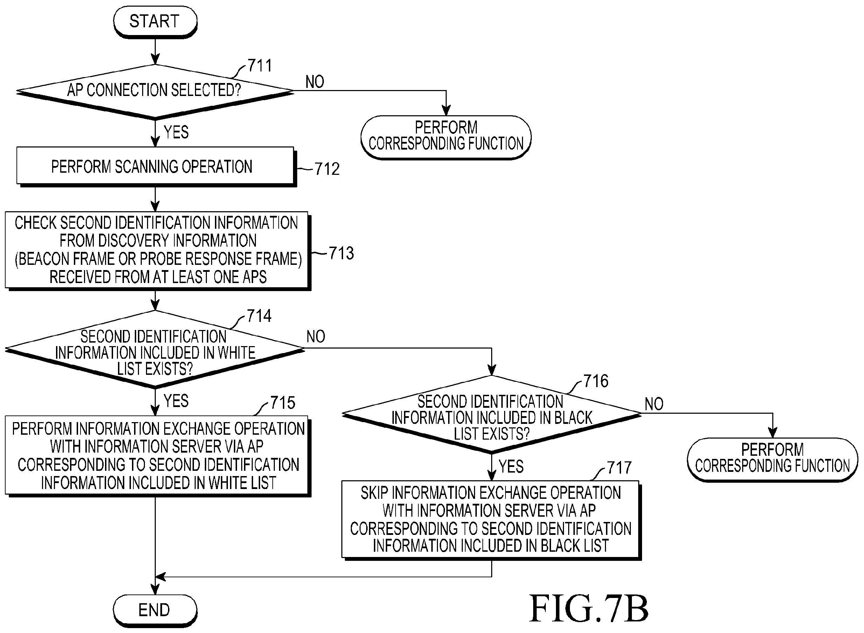

FIGS. 7A and 7B are flowcharts illustrating a process of connecting short-range communication in an electronic device according to an embodiment of the present invention.

A description will now be made of the current embodiment of the present invention also referring to FIGS. 1 to 3.

Referring to FIG. 7A, at operation 701, the controller 110 determines whether an AP connection is selected.

If the controller 110 determines that the AP connection is not selected at operation 701, then the controller 110 may perform a corresponding function.

In contrast, if the controller 110 determines that AP connection is selected by the user at operation 701, then the controller 110 may proceed to operation 702 at which the controller 110 performs a scan operation for discovering a neighboring AP.

If at least one APs are discovered through the scan operation, then at operation 703, the controller 110 detects an AP that meets a preset criterion (e.g., an AP having the lowest BSS load, an AP having the highest RSSI, or the like), for example, a first AP, from among the at least one discovered APs. The controller 110 may then perform the information exchange operation with the information server 200 via the detected first AP.

At operation 704, the controller 110 displays advertisement service data provided by a service provider among network information of the first AP received through the information exchange operation of the information server 200 on a display unit 160 of the electronic device 100.

At operation 705, the controller 110 determines whether an advertisement service information is selected.

If the controller 110 determines that the advertisement service data displayed on the display unit 160 is selected by the user at operation 705, then the controller 110 may proceed to operation 706 at which the controller 110 stores second identification information of the first AP in a white list.

If the controller 110 determines that the advertisement service data displayed on the display unit 160 is not selected by the user at operation 705, then the controller 110 may proceed to operation 707 at which the controller 110 stores the second identification information of the first AP in a black list.

Prior to Wi-Fi connection with an AP through an operation illustrated in FIG. 7A, the controller 110 may provide advertisement service data to the user through the information exchange operation with the information server via the AP and add second identification information of the AP that provides the advertisement service data to the white list or the black list according to whether the user selects the advertisement service data.

Referring to FIG. 7B, at operation 711, the controller 110 determines whether an AP connection is selected.

If the controller 110 determines that the AP connection is not selected, then the controller 110 may perform a corresponding function.

In contrast, if the controller 110 determines that AP connection is selected by the user at operation 711, then the controller 110 may proceed to operation 712 at which the controller 110 performs a scan operation for discovering a neighboring AP.

If at least one APs are selected through the scan operation, then the controller 110 may proceed to operation 713 at which the controller 110 checks second identification information sub HESSID for identifying a service venue of a service provider from a beacon frame or probe response frame that is discovery information received from each of the at least one discovered APs.

At operation 714, the controller 110 determines whether second identification information included in the white list exists among second identification information of the respective at least one APs.

If the controller 110 determines that second identification information included in the white list exists among the second identification information of the respective at least one APs at operation 714, then the controller 110 may proceed to operation 715 at which the controller 110 detects an AP corresponding to the second identification information included in the white list among the second identification information of the respective at least one APs. At operation 715, the controller 110 may first perform the information exchange operation with the information server 200 via the AP corresponding to the second identification information included in the white list, and provide advertisement service data received through the information exchange operation to the user.

If a plurality of APs correspond to the second identification information included in the white list at operation 715, then the controller 110 performs the information exchange operation with the information server 200 via a corresponding AP according to a preset priority and provides advertisement service data received through the information exchange operation to the user. The preset priority may be, for example, a priority based on a venue determined by the user, a priority based on a more recently selected venue, or a priority based on a higher RSSI.

If the controller 110 determines that second identification information included in the black list exists among the second identification information of the at least one respective APs at operation 716, then the controller 110 may proceed to operation 717 at which the controller 110 detects an AP corresponding to the second identification information included in the black list from among the second identification information of the at least one respective APs.

At operation 717, the controller 110 may skip the information exchange operation with the information server 200 via the AP corresponding to the second identification information included in the black list, not to provide advertisement service data provided in the second identification information included in the black list to the user.

If the controller 110 determines that second identification information exists, which is not included in either the white list or the black list, among the second identification information corresponding to the at least one respective APs, then the controller 110 may wait for completion of the information exchange operation with the information server 200 via an AP corresponding to second identification information included in the white list. Upon completion of the information exchange operation with the information server 200 via the AP corresponding to the second identification information included in the white list, the controller 110 performs the information exchange operation with the information server 200 via an AP corresponding to the second identification information that is not included in either the white list or the black list, and provides advertisement service data received through the information exchange operation to the user.

As in FIGS. 7A and 7B, by using the white list or the black list, the information exchange operation with the information server may be selectively performed and advertisement service data provided in a desired venue may be provided to the user.

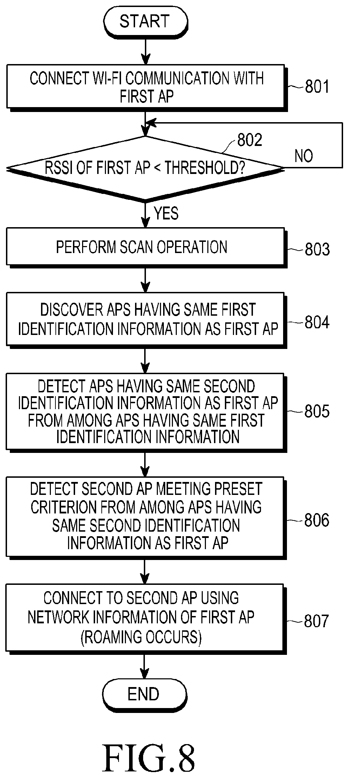

FIG. 8 is a flowchart illustrating a process of connecting short-range communication in an electronic device according to yet another embodiment of the present invention.

Referring to FIG. 8, in the same venue, the electronic device roams from a first AP to a second AP.

Hereinafter, the current embodiment of the present invention will be described in detail also referring to FIGS. 1 to 3.

Referring to FIG. 8, at operation 801, the electronic device connects a Wi-Fi connection to a first AP.

If the electronic device is in Wi-Fi connection with a first AP a1 at operation 801, then at operation 802, the controller 110 compares an RSSI of the first AP a1 with a preset threshold. For example, the controller 110 determines whether the RSSI of the first AP is less than a preset threshold.

If the controller determines that the RSSI of the first AP a1 is less than the threshold at operation 802, then the controller 110 may proceed to operation 803 at which the controller 110 performs a scan operation for discovering a neighboring AP.

If at least one APs are discovered through the scan operation, then the controller 110 checks second identification information sub HESSID for identifying a service venue of a service provider from a beacon frame or probe response frame that is discovery information received from each of the at least one discovered APs.

At operation 804, the controller 110 searches for APs having the same first identification information as the first identification information of the first AP among the at least one discovered APs.

At operation 805, the controller 110 detects APs a2 - an having the same second identification information as that of the first AP among the APs having the same first identification information as that of the first AP.

At operation 806, the controller 110 detects an AP that meets a preset criterion, for example, an AP having the highest RSSI, as a second AP a2 among the APs a2 - an having the same second identification information as that of the first AP.

The first identification information and the second identification information of the second AP are the same as the first identification information and the second identification information of the first AP, such that at operation 807, the controller 110 may connect Wi-Fi communication with the second AP a2 by using network information of the first AP a1 without the information exchange operation with the information server 200.

As in FIG. 8, by detecting the second AP having the same first identification information and second identification information as those of the first AP before the electronic device, which has been connected with the first AP, is connected with the second AP after moving (e.g., before roaming occurs), the electronic device may be quickly connected with the second AP without having to perform the information exchange operation with the information server.

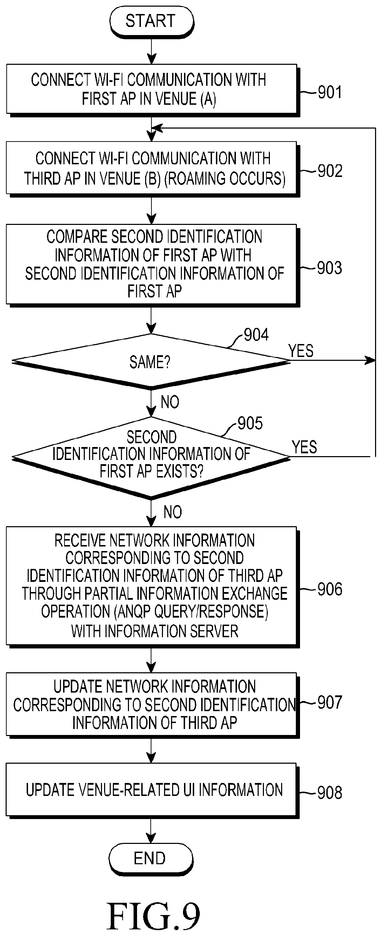

If the controller 110 fails to detect the APs having the same second identification information as that of the first AP among the APs having the same first identification information as that of the first AP at operation 805, then the controller 110 determines that roaming occurs due to venue change rather than due to change between APs in the same venue and performs operations of FIG. 9.

FIG. 9 is a flowchart illustrating a process of connecting short-range communication in an electronic device according to an embodiment of the present invention.

Referring to FIG. 9, it is described that an electronic device connected to a first AP in a venue "A" roams to a third AP, which has the same first identification information as that of the first AP, in a venue "B".

The current embodiment of the present invention will be described in detail, also referring to FIGS. 1 through 3.

Referring to FIG. 9, at operation 901, if an electronic device connected by Wi-Fi communication with a first AP a1 in a venue A moves to a venue B in which a plurality of APs b1 - b3 supported by the same service provider are located, then the controller 110 proceeds to operation 902 at which the controller 110 connects Wi-Fi communication with an AP having the highest RSSI, for example, a third AP b1, among the plurality of APs b1 - b 3.

If the electronic device connected with the first AP a1 in the venue A moves to the venue B and thus an RSSI of the first AP a1 is less than a threshold at operation 902, then the controller 110 performs a scan operation. The controller 110 detects an RSSI of an AP from a beacon frame or probe response frame that is discovery information received from each of at least one APs b1 - bn discovered through the scan operation and connects Wi-Fi communication with a third AP b1 having the highest RSSI. The controller 110 may connect Wi-Fi communication with the third AP b1 by using network information of the first AP a1.

After connection with the third AP b1, at operation 903, the controller 110 compares second identification information of the first AP a1 prior to roaming with second identification information of the third AP b1 after roaming.

At operation 904, the controller 110 determines whether second identification information sub HESSID A of the first AP a1 is the same as second identification information sub HESSID B of the third AP b1.

If the controller 110 determines that second identification information sub HESSID A of the first AP a1 is the same as second identification information sub HESSID B of the third AP b1, then the controller 110 returns to operation 902.

If the controller 110 determines that second identification information sub HESSID A of the first AP a1 is not the same as second identification information sub HESSID B of the third AP b1 at operation 904, then the controller 110 proceeds to operation 905 at which the controller 110 determines whether the second identification information sub HESSID B of the third AP b1exists in the memory 130.

If the controller 110 determines that that the second identification information sub HESSID B of the third AP b1 exists at operation 905, then the controller 110 returns to operation 902.

If the controller 110 determines that the second identification information sub HESSID B of the third AP b1 does not exist at operation 905, then the controller 110 proceeds to operation 906 at which the controller 110 receives venue-related network information of the third AP b1 through a partial information exchange operation with the information server 200 via the third AP b1.

Although it is described that network information corresponding to the second identification information sub HESSID B of the third AP b1 is received through the partial information exchange operation at operation 906, the controller 110 may receive the entire network information of the third AP through a complete information exchange operation with the information server 200.

At operation 907, the controller 110 associates the second identification information sub HESSID B and the network information corresponding to the second identification information sub HESSID B received through the partial information exchange operation with the profile information of the third AP stored in the memory 130 to update the stored profile information of the third AP.

If the entire network information of the third AP b1 is received through the complete information exchange operation, the controller 110 may newly update the network information of the third AP b1 included in the profile information of the third AP b1 stored in the memory 130 with the received network information of the third AP b1 at operation 907. The controller 110 may also associate venue-related network information in the network information of the third AP with the second identification information sub HESSID B to store the network information in the profile information of the third AP b1.

If the second identification information sub HESSID B of the third AP b1 is updated at operation 907, then the controller 110 proceeds to operation 908 at which the controller 110 updates venue "B"-related information with the updated second identification information sub HESSID B and provides the updated information through the display unit 160.

Although roaming occurs because the electronic device moves to a venue provided by the same service provider, if provided service information differs according to venue, service information provided in the venue may be provided to the user by updating the second identification information through the operations illustrated in FIG. 9.

According to exemplary embodiments of the present invention, by providing a method for connecting short-range communication in an electronic device and the electronic device, an unnecessary information exchange operation with an information server is minimized, thus optimizing (or improving) a connection speed of the external device, increasing the efficiency of a network, and optimizing (or improving) power consumption.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

For example, a method for connecting short-range communication in an electronic device according to various exemplary embodiments of the present invention can be embodied as a computer-readable code on a non-transitory computer-readable recording medium. The non-transitory computer-readable recording medium is any data storage device that can store data which can be thereafter read by a computer system. Examples of computer-readable recording media include Read-Only Memory (ROM), Random-Access Memory (RAM), optical disks, magnetic tapes, floppy disks, hard disks, non-volatile memories, and the like, and carrier waves (e.g., transmission through the Internet). The non-transitory computer-readable recording medium can also be distributed over network-coupled computer systems so that the computer-readable code is stored and executed in a decentralized fashion.

It will be appreciated that the storage devices and storage media are embodiments of machine-readable storage that are suitable for storing a program or programs comprising instructions that, when executed, implement embodiments of the present invention. Accordingly, embodiments of the present invention provide a program comprising instructions or code for implementing an apparatus, system or method according to any aspect, claim or embodiment disclosed herein, and a machine-readable storage storing such a program.

While the present invention has been shown and described with reference to certain exemplary embodiments thereof, it will be understood by those skilled in the art that various changes in form and details may be made therein without departing from the scope of the present invention, as defined by the appended claims.

## Claims

1. A method for connecting short-range communication in an electronic device, the method comprising:
detecting first identification information for identifying a service provider and second identification information for identifying a service venue of the service provider from discovery information received from a first external device;
connecting communication with the first external device by using network information of the first external device, which is stored in the electronic device, if the detected first identification information and second identification information exist in the electronic device; and
connecting communication with the first external device by using network information of the first external device, which is received from an information server through an information exchange operation with the information server via the first external device, if the detected second identification information does not exist in the electronic device.

2. The method of claim 1, further comprising:
discovering at least one external device through a scan operation if external device connection is selected in the electronic device;
checking the first identification information for identifying a service provider and checking the second identification information from discovery information received from each of the at least one discovered external device;
classifying the at least one external device according to service provider based on the first identification information and classifying the external devices classified according to service provider according to venue based on the second identification information; and
detecting a first external device that meets a preset criterion from among the at least one external device classified according to venue.

3. The method of claim 2, wherein the discovery information comprises a beacon frame or probe response frame that is broadcast from the first external device, and the discovery information comprises the first identification information and the second identification information or comprises the first identification information, the second identification information, and server update version information,
wherein the first identification information comprises an identifier having a particular Medium Access Control, MAC, address among MAC addresses corresponding to all networks provided by the service provider, and
wherein the second identification information comprises a particular MAC address among MAC addresses corresponding to service venues of the service provider or a unique ID.

4. The method of claim 1, further comprising:
receiving network information of the first external device from the information server through an information exchange operation with the information server via the first external device, if the detected first identification information does not exist in the electronic device;
updating, by addition, profile information of the first external device, which comprises the detected first identification information of the first external device, the detected second identification information of the first external device, and the received network information of the first external device; and
connecting communication with the first external device by using the received network information of the first external device.

5. The method of claim 1, further comprising:
receiving network information of the first external device from the information server through an information exchange operation with the information server via the first external device, if the detected first identification information exists and the second identification information does not exist in the electronic device;
associating the detected second identification information of the first external device with the received network information of the first external device to update, by addition, profile information of the first external device; and
connecting communication with the first external device by using the received network information of the first external device.

6. The method of any preceding claim, further comprising:
newly updating profile information of the first external device with the detected first identification information of the first external device, the detected second identification information of the first external device, and the received network information of the first external device; and
connecting communication with the first external device by using the received network information of the first external device.

7. The method of any preceding claim, further comprising:
comparing server update version information detected from the discovery information of the first external device with server update version information of profile information of the first external device, which is stored in the electronic device, if the second identification information exists in the electronic device; and
connecting communication with the first external device by using the network information of the first external device stored in the electronic device, if the server update version information are the same as each other as a result of the comparison.

8. The method of claim 7, further comprising:
receiving network information of the first external device from the information server through an information exchange operation with an information server via the first external device, if the server update version information are not the same as each other as a result of the comparison;
newly updating profile information of the first external device with the detected first identification information of the first external device, the detected second identification information of the first external device, and the received network information of the first external device; and
connecting communication with the first external device by using the received network information of the first external device.

9. The method of any preceding claim, further comprising:
detecting and display advertisement service data from network information received through an information exchange operation with an information server via the first external device and displaying the detected advertisement service data, prior to connection with the first external device;
adding second identification information of the first external device to a white list, if the advertisement service data is selected; and
adding the second identification information of the first external device to a black list, if the advertisement service data is not selected.

10. The method of claim 9, further comprising:
discovering at least one external device through a scan operation, if external device connection is selected in the electronic device;
checking the second identification information from discovery information received from each of the at least one discovered external device;
performing the information exchange operation with the information server via an external device corresponding to second identification information included in the white list, if the second identification information included in the white list exists among the second identification information of the respective at least one external device; and
skipping the information exchange operation with the information server via the external device corresponding to the second identification information included in the black list, if the second identification information included in the black list exists among the second identification information of the respective at least one external device.

11. The method of any preceding claim, further comprising:
performing a scan operation if a Received Signal Strength Indicator, RSSI, of the first external device is less than a threshold when communication with the first external device is in a connection state;
discovering external devices having the same first identification information as first identification information of the first external device through the scan operation;
detecting external devices having the same second identification information as second identification information of the first external device from among external devices having the same first identification information as first identification information of the first external device;
detecting a second external device that meets a preset criterion from among external devices having the same second identification information as second identification information of the first external device; and
connecting communication with the second external device by using the network information of the first external device.

12. The method of any preceding claim, further comprising:
connecting communication with a third external device having the same first identification information as first identification information of the first external device in a new venue, if the electronic device moves to the new venue, determined when an RSSI of the first external device is less than a threshold, when communication with the first external device is in a connection state;
comparing second identification information of the first external device with second identification information of the third external device;
determining whether the second identification information of the third external device exists in the electronic device, if the second identification information of the first external device is not the same as the second identification information of the third external device as a result of the comparison;
receiving network information of the third external device through an information exchange operation with an information server via the third external device, if the second identification information of the third external device does not exist in the electronic device; and
associating the second identification information of the third external device with the network information of the third external device to update, by addition, profile information of a second external device.

13. An electronic device comprising a controller configured to implement a method according to any preceding claim.

## Patentansprüche

1. Ein Verfahren zum Verbinden von Nahbereichskommunikation in einer elektronischen Vorrichtung, wobei das Verfahren Folgendes umfasst:
Ermitteln von ersten Identifizierungsinformationen zur Identifizierung eines Dienstleistungserbringers und zweiten Identifizierungsinformationen zur Identifizierung eines Dienststandorts des Dienstleistungserbringers aus Suchinformationen, die von einer ersten externen Vorrichtung empfangen wurden;
Verbinden der Kommunikation mit der ersten externen Vorrichtung anhand der in der elektronischen Vorrichtung gespeicherten Netzwerkinformationen der ersten externen Vorrichtung, wenn die ermittelten ersten Identifizierungsinformationen und die zweiten Identifizierungsinformationen in der elektronischen Vorrichtung vorhanden sind; und
Verbinden der Kommunikation mit der ersten externen Vorrichtung, indem die Netzwerkinformationen der ersten externen Vorrichtung verwendet werden, die von einem Informationsserver mittels eines Informationsaustauschvorgangs mit dem Informationsserver über die erste externe Vorrichtung empfangen werden, wenn die ermittelten zweiten Identifizierungsinformationen nicht in der elektronischen Vorrichtung vorhanden sind.

2. Das Verfahren nach Anspruch 1, wobei dieses weiter Folgendes umfasst:
Suchen von mindestens einer externen Vorrichtung mittels eines Suchvorgangs, wenn eine externe Geräteverbindung in der elektronischen Vorrichtung ausgewählt wurde;
Überprüfen der ersten Identifizierungsinformationen zur Identifizierung eines Dienstleistungserbringers und Überprüfen der zweiten Identifizierungsinformationen basierend auf Suchinformationen, die von mindestens einer der ermittelten externen Vorrichtungen empfangen wurden;
Klassifizieren von mindestens einer externen Vorrichtung nach Dienstleistungserbringer basierend auf den ersten Identifizierungsinformationen und Klassifizieren der nach Dienstleistungserbringer klassifizierten externen Vorrichtungen nach Standort basierend auf den zweiten Identifizierungsinformationen; und
Ermitteln einer ersten externen Vorrichtung, die einem voreingestellten Kriterium entspricht, aus mindestens einer der nach Standort klassifizierten externen Vorrichtungen.

3. Das Verfahren nach Anspruch 2, wobei die Suchinformationen einen Signalrahmen oder einen Prüfantwortrahmen umfassen, der von der ersten externen Vorrichtung übertragen wird, und wobei die Suchinformationen die ersten Identifizierungsinformationen und die zweiten Suchinformationen oder die ersten Identifizierungsinformationen, die zweiten Identifizierungsinformationen und Informationen zur Aktualisierungsversion des Servers umfassen,
wobei die ersten Identifizierungsinformationen einen Bezeichner mit einer bestimmten "Medium Access Control"-Adresse (MAC) unter den MAC-Adressen aufweisen, die allen vom Dienstleistungserbringer bereitgestellten Netzwerken entsprechen; und
wobei die zweiten Identifizierungsinformationen eine bestimmte MAC-Adresse unter den MAC-Adressen aufweisen, die den Dienststandorten des Dienstleistungserbringers oder einer eindeutigen Kennung entsprechen.

4. Das Verfahren nach Anspruch 1, wobei dieses weiter Folgendes umfasst:
Empfangen von Netzwerkinformationen der ersten externen Vorrichtung von dem Informationsserver mittels eines Informationsaustauschvorgangs mit dem Informationsserver über die erste externe Vorrichtung, wenn die ermittelten ersten Identifizierungsinformationen nicht in der elektronischen Vorrichtung vorhanden sind;
zusätzliches Aktualisieren der Profilinformationen der ersten externen Vorrichtung, welche die ermittelten ersten Identifizierungsinformationen der ersten externen Vorrichtung, die ermittelten zweiten Identifizierungsinformationen der ersten externen Vorrichtung und die empfangenen Netzwerkinformationen der ersten externen Vorrichtung umfassen; und
Verbinden der Kommunikation mit der ersten externen Vorrichtung, indem die empfangenen Netzwerkinformationen der ersten externen Vorrichtung verwendet werden.

5. Das Verfahren nach Anspruch 1, wobei es weiter Folgendes umfasst:
Empfangen von Netzwerkinformationen der ersten externen Vorrichtung von dem Informationsserver mittels eines Informationsaustauschvorgangs mit dem Informationsserver über die erste externe Vorrichtung, wenn die ermittelten ersten Identifizierungsinformationen in der elektronischen Vorrichtung vorhanden sind und die zweiten Identifizierungsinformationen nicht in der elektronischen Vorrichtung vorhanden sind;
Verknüpfen der ermittelten zweiten Identifizierungsinformationen der ersten externen Vorrichtung mit den empfangenen Netzwerkinformationen der ersten externen Vorrichtung, um zusätzlich die Profilinformationen der ersten externen Vorrichtung zu aktualisieren; und
Verbinden der Kommunikation mit der ersten externen Vorrichtung anhand der empfangenen Netzwerkinformationen der ersten externen Vorrichtung.

6. Das Verfahren nach einem vorhergehenden Anspruch, wobei es weiter Folgendes umfasst:
erneutes Aktualisieren der Profilinformationen der ersten externen Vorrichtung mit den ermittelten ersten Identifizierungsinformationen der ersten externen Vorrichtung, den ermittelten zweiten Identifizierungsinformationen der ersten externen Vorrichtung und den empfangenen Netzwerkinformationen der ersten externen Vorrichtung; und
Verbinden der Kommunikation mit der ersten externen Vorrichtung, indem die empfangenen Netzwerkinformationen der ersten externen Vorrichtung verwendet werden.

7. Das Verfahren nach einem vorhergehenden Anspruch, wobei es weiter Folgendes umfasst:
Vergleichen der Informationen zur Aktualisierungsversion des Servers, die aus den Suchinformationen der ersten externen Vorrichtung ermittelt wurden, mit den Informationen zur Aktualisierungsversion des Servers der in der elektronischen Vorrichtung gespeicherten Profilinformationen der ersten externen Vorrichtung, wenn die zweiten Identifizierungsinformationen in der elektronischen Vorrichtung vorhanden sind; und
Verbinden der Kommunikation mit der ersten externen Vorrichtung anhand der in der elektronischen Vorrichtung gespeicherten Netzwerkinformationen der ersten externen Vorrichtung, wenn die Informationen zur Aktualisierungsversion des Servers infolge des Vergleichs miteinander übereinstimmen.

8. Das Verfahren nach Anspruch 7, wobei es weiter Folgendes umfasst:
Empfangen von Netzwerkinformationen der ersten externen Vorrichtung von dem Informationsserver mittels eines Informationsaustauschvorgangs mit einem Informationsserver über die erste externe Vorrichtung, wenn die Informationen zur Aktualisierungsversion des Servers infolge des Vergleichs nicht miteinander übereinstimmen;
erneutes Aktualisieren der Profilinformationen der ersten externen Vorrichtung mit den ermittelten ersten Identifizierungsinformationen der ersten externen Vorrichtung, den ermittelten zweiten Identifizierungsinformationen der ersten externen Vorrichtung und den empfangenen Netzwerkinformationen der ersten externen Vorrichtung; und
Verbinden der Kommunikation mit der ersten externen Vorrichtung, indem die empfangenen Netzwerkinformationen der ersten externen Vorrichtung verwendet werden.

9. Das Verfahren nach einem vorhergehenden Anspruch, wobei es weiter Folgendes umfasst:
Ermitteln und Anzeigen von Werbedienstdaten aus Netzwerkinformationen, die mittels eines Informationsaustauschvorgangs mit einem Informationsserver über die erste externe Vorrichtung empfangen wurden, und Anzeigen der ermittelten Werbedienstdaten vor der Verbindung mit der ersten externen Vorrichtung;
Hinzufügen von zweiten Identifizierungsinformationen der ersten externen Vorrichtung zu einer weißen Liste, wenn Werbedienstdaten aktiviert sind; und
Hinzufügen von zweiten Identifizierungsinformationen der ersten externen Vorrichtung zu einer schwarzen Liste, wenn Werbedienstdaten nicht aktiviert sind.

10. Das Verfahren nach Anspruch 9, wobei es weiter Folgendes umfasst:
Suchen von mindestens einer externen Vorrichtung mittels eines Suchvorgangs, wenn eine externe Geräteverbindung in der elektronischen Vorrichtung ausgewählt wurde;
Überprüfen der zweiten Identifizierungsinformationen aus den Suchinformationen, die von jeder externen Vorrichtung der mindestens einen ermittelten externen Vorrichtung empfangen wurden;
Durchführen des Informationsaustauschvorgangs mit dem Informationsserver über eine externe Vorrichtung, die den in der weißen Liste enthaltenen zweiten Identifizierungsinformationen entspricht, wenn die in der weißen Liste enthaltenen Identifizierungsinformationen in den zweiten Identifizierungsinformationen der jeweiligen mindestens einen externen Vorrichtung vorhanden sind; und
Überspringen des Informationsaustauschvorgangs mit dem Informationsserver über die externe Vorrichtung, die den in der schwarzen Liste enthaltenen zweiten Identifizierungsinformationen entspricht, wenn die in der schwarzen Liste enthaltenen Identifizierungsinformationen in den zweiten Identifizierungsinformationen der jeweiligen mindestens einen externen Vorrichtung vorhanden sind.

11. Das Verfahren nach einem vorhergehenden Anspruch, wobei es weiter Folgendes umfasst:
Durchführen eines Suchvorgangs, wenn ein Received Signal Strength Indicator (RSSI) der ersten externen Vorrichtung unter einem Grenzwert liegt, sobald sich die Kommunikation mit der ersten externen Vorrichtung in einem Verbindungsstatus befindet;
Suchen externer Vorrichtungen mit denselben Identifizierungsinformationen wie den ersten Identifizierungsinformationen der ersten externen Vorrichtung mittels eines Suchvorgangs;
Ermitteln externer Vorrichtungen mit denselben zweiten Identifizierungsinformationen wie den zweiten Identifizierungsinformationen der ersten externen Vorrichtung in den externen Vorrichtungen mit denselben ersten Identifizierungsinformationen wie den ersten Identifizierungsinformationen der ersten externen Vorrichtung;
Ermitteln einer zweiten externen Vorrichtung, die einem voreingestellten Kriterium entspricht, in den externen Vorrichtungen mit denselben zweiten Identifizierungsinformationen wie den zweiten Identifizierungsinformationen der ersten externen Vorrichtung; und
Verbinden der Kommunikation mit der zweiten externen Vorrichtung, indem die Netzwerkinformationen der ersten externen Vorrichtung verwendet werden.

12. Das Verfahren nach einem vorhergehenden Anspruch, wobei es weiter Folgendes umfasst:
Verbinden der Kommunikation mit einer dritten externen Vorrichtung mit denselben ersten Identifizierungsinformationen wie den ersten Identifizierungsinformationen der ersten externen Vorrichtung an einem neuen Standort, wenn sich die elektronische Vorrichtung an einem neuen Standort befindet, der ermittelt wird, wenn ein RSSI der ersten externen Vorrichtung unter einem Grenzwert liegt, sobald sich die Kommunikation mit der ersten externen Vorrichtung in einem Verbindungsstatus befindet;
Vergleichen der zweiten Identifizierungsinformationen der ersten externen Vorrichtung mit den zweiten Identifizierungsinformationen der dritten externen Vorrichtung;
Ermitteln, ob die zweiten Identifizierungsinformationen der dritten externen Vorrichtung in der elektronischen Vorrichtung vorhanden sind, wenn die zweiten Identifizierungsinformationen der ersten externen Vorrichtung infolge des Vergleichs nicht mit den zweiten Identifizierungsinformationen der dritten externen Vorrichtung übereinstimmen;
Empfangen von Netzwerkinformationen der dritten externen Vorrichtung mittels eines Informationsaustauschvorgangs mit einem Informationsserver über die dritte externe Vorrichtung, wenn die zweiten Identifizierungsinformationen der dritten externen Vorrichtung nicht in der elektronischen Vorrichtung vorhanden sind; und
Verknüpfen der zweiten Identifizierungsinformationen der dritten externen Vorrichtung mit den Netzwerkinformationen der dritten externen Vorrichtung, um zusätzlich die Profilinformationen einer zweiten externen Vorrichtung zu aktualisieren.

13. Eine elektronische Vorrichtung, die eine Steuereinheit umfasst, die zum Umsetzen eines Verfahrens gemäß einem vorhergehenden Anspruch eingerichtet ist.

## Revendications

1. Procédé de connexion de communication à courte distance dans un dispositif électronique, le procédé comprenant :
la détection de premières informations d'identification pour identifier un fournisseur de services et de secondes informations d'identification pour identifier un lieu de service du fournisseur de services parmi des informations de découverte reçues depuis un premier dispositif externe ;
la connexion d'une communication avec le premier dispositif externe en utilisant des informations de réseau du premier dispositif externe, lesquelles sont mémorisées dans le dispositif électronique, si les premières informations d'identification et secondes informations d'identification détectées existent dans le dispositif électronique ; et
la connexion d'une communication avec le premier dispositif externe en utilisant des informations de réseau du premier dispositif externe, lesquelles sont reçues depuis un serveur d'informations par le biais d'une opération d'échange d'informations avec le serveur d'informations par l'intermédiaire du premier dispositif externe, si les secondes informations d'identification détectées n'existent pas dans le dispositif électronique.

2. Procédé selon la revendication 1, comprenant en outre :
la découverte d'au moins un dispositif externe par le biais d'une opération de balayage si une connexion de dispositif externe est sélectionnée dans le dispositif électronique ;
la vérification des premières informations d'identification pour identifier un fournisseur de services et la vérification des secondes informations d'identification des informations de découverte reçues depuis chacun de l'au moins un dispositif externe découvert ;
la classification de l'au moins un dispositif externe conformément au fournisseur de services d'après les premières informations d'identification et la classification des dispositifs externes classifiés conformément au fournisseur de services conformément au lieu d'après les secondes informations d'identification ;
la détection d'un premier dispositif externe qui satisfait un critère prédéfini parmi l'au moins un dispositif externe classifié conformément au lieu.

3. Procédé selon la revendication 2, dans lequel les informations de découverte comprennent une trame balise ou une trame de réponse sonde qui est diffusée par le premier dispositif externe, et les informations de découverte comprennent les premières informations d'identification et les secondes informations d'identification ou comprennent les premières informations d'identification, les secondes informations d'identification, et des informations de version d'actualisation de serveur,
dans lequel les premières informations d'identification comprennent un identifiant ayant une adresse de commande d'accès au support, MAC, particulière parmi des adresses MAC correspondant à tous les réseaux fournis par le fournisseur de services, et
dans lequel les secondes informations d'identification comprennent une adresse MAC particulière parmi les adresses MAC correspondant aux lieux de service du fournisseur de services ou un ID unique.

4. Procédé selon la revendication 1, comprenant en outre :
la réception d'informations de réseau du premier dispositif externe depuis le serveur d'informations par le biais d'une opération d'échange d'informations avec le serveur d'informations par l'intermédiaire du premier dispositif externe, si les premières informations d'identification détectées n'existent pas dans le dispositif électronique ;
l'actualisation, par addition, d'informations de profil du premier dispositif externe, lesquels comprennent les premières informations d'identification détectées du premier dispositif externe, les secondes informations d'identification détectées du premier dispositif externe, et les informations de réseau reçues du premier dispositif externe ; et
la connexion d'une communication avec le premier dispositif externe en utilisant les informations de réseau reçues du premier dispositif externe.

5. Procédé selon la revendication 1, comprenant en outre :
la réception d'informations de réseau du premier dispositif externe depuis le serveur d'informations par le biais d'une opération d'échange d'informations avec le serveur d'informations par l'intermédiaire du premier dispositif externe, si les premières informations d'identification détectées existent et les secondes informations d'identification n'existent pas dans le dispositif électronique ;
l'association des secondes informations d'identification détectées du premier dispositif externe aux informations de réseau reçues du premier dispositif externe pour actualiser, par addition, des informations de profil du premier dispositif externe ; et
la connexion d'une communication avec le premier dispositif externe en utilisant les informations de réseau reçues du premier dispositif externe.

6. Procédé selon l'une quelconque des revendications précédentes, comprenant en outre :
l'actualisation à nouveau d'informations de profil du premier dispositif externe avec les premières informations d'identification détectées du premier dispositif externe, les secondes information d'identification détectées du premier dispositif externe, et les informations de réseau reçues du premier dispositif externe ; et
la connexion d'une communication avec le premier dispositif externe en utilisant les informations de réseau reçues du premier dispositif externe.

7. Procédé selon l'une quelconque des revendications précédentes, comprenant en outre :
la comparaison d'informations de version d'actualisation de serveur détectées parmi les informations de découverte du premier dispositif externe à des informations de version d'actualisation de serveur d'informations de profil du premier dispositif externe, lesquelles sont mémorisées dans le dispositif électronique, si les secondes informations d'identification existent dans le dispositif électronique ; et
la connexion d'une communication avec le premier dispositif externe en utilisant les informations de réseau du premier dispositif externe mémorisées dans le dispositif électronique, si la comparaison montre que les informations de version d'actualisation de serveur sont identiques.

8. Procédé selon la revendication 7, comprenant en outre :
la réception d'informations de réseau du premier dispositif externe depuis le serveur d'informations par le biais d'une opération d'échange d'informations avec un serveur d'informations par l'intermédiaire du premier dispositif externe, si la comparaison montre que les informations de version d'actualisation de serveur ne sont pas identiques ;
l'actualisation à nouveau d'informations de profil du premier dispositif externe avec les premières informations d'identification détectées du premier dispositif externe, les secondes informations d'identification détectées du premier dispositif externe, et les informations de réseau reçues du premier dispositif externe ; et
la connexion d'une communication avec le premier dispositif externe en utilisant les informations de réseau reçues du premier dispositif externe.

9. Procédé selon l'une quelconque des revendications précédentes, comprenant en outre :
la détection et l'affichage de données de service d'annonces d'informations de réseau reçues par le biais d'une opération d'échange d'informations avec un serveur d'informations par l'intermédiaire du premier dispositif externe et l'affichage des données de service d'annonces détectées, avant la connexion avec le premier dispositif externe ;
l'ajout de secondes informations d'identification du premier dispositif externe à une liste blanche, si les données de service d'annonces sont sélectionnées ; et
l'ajout des secondes informations d'identification du premier dispositif externe à une liste noire, si les données de service d'annonces ne sont pas sélectionnées.

10. Procédé selon la revendication 9, comprenant en outre :
la découverte d'au moins un dispositif externe par le biais d'une opération de balayage, si une connexion de dispositif externe est sélectionnée dans le dispositif électronique ;
la vérification des secondes informations d'identification des informations de découverte reçues depuis chacun de l'au moins un dispositif externe découvert ;
l'exécution de l'opération d'échange d'informations avec le serveur d'informations par l'intermédiaire d'un dispositif externe correspondant à des secondes informations d'identification incluses dans la liste blanche, si les secondes informations d'identification incluses dans la liste blanche existent parmi les secondes informations d'identification de l'au moins un dispositif externe respectif ; et
le saut de l'opération d'échange d'informations avec le serveur d'informations par l'intermédiaire du dispositif externe correspondant aux secondes informations d'identification incluses dans la liste noire, si les secondes informations d'identification incluses dans la liste noire existent parmi les secondes informations d'identification de l'au moins un dispositif externe respectif.

11. Procédé selon l'une quelconque des revendications précédentes, comprenant en outre :
l'exécution d'une opération de balayage si un indicateur de force de signal reçu, RSSI, du premier dispositif externe est inférieur à un seuil quand la communication avec le premier dispositif externe est dans un état de connexion ;
la découverte de dispositifs externes ayant les mêmes premières informations d'identification que les premières informations d'identification du premier dispositif externe par le biais de l'opération de balayage ;
la détection de dispositifs externes ayant les mêmes secondes informations d'identification que les secondes informations d'identification du premier dispositif externe parmi les dispositifs externes ayant les mêmes premières informations d'identification que les premières informations d'identification du premier dispositif externe ;
la détection d'un deuxième dispositif externe qui satisfait un critère préétabli parmi les dispositifs externes ayant les mêmes secondes informations d'identification que les secondes informations d'identification du premier dispositif externe ; et
la connexion de la communication avec le deuxième dispositif externe en utilisant les informations de réseau du premier dispositif externe.

12. Procédé selon l'une quelconque des revendications précédentes, comprenant en outre :
la connexion d'une communication avec un troisième dispositif externe ayant les mêmes premières informations d'identification que les premières informations d'identification du premier dispositif externe dans un nouveau lieu, si le dispositif électronique se rend au nouveau lieu, déterminé quand un RSSI du premier dispositif externe est inférieur à un seuil, quand la communication avec le premier dispositif externe est dans un état de connexion ;
la comparaison de secondes informations d'identification du premier dispositif externe à des secondes informations d'identification du troisième dispositif externe ;
la détermination que les secondes informations d'identification du troisième dispositif externe existent ou non dans le dispositif électronique, si les secondes informations d'identification du premier dispositif externe ne sont pas identiques aux secondes informations d'identification du troisième dispositif externe suite à la comparaison ;
la réception d'informations de réseau du troisième dispositif externe par le biais d'une opération d'échange d'informations avec un serveur d'informations par l'intermédiaire du troisième dispositif externe, si les secondes informations d'identification du troisième dispositif externe n'existent pas dans le dispositif électronique ; et
l'association des secondes informations d'identification du troisième dispositif externe aux informations de réseau du troisième dispositif externe pour actualiser, par addition, des informations de profil d'un deuxième dispositif externe.

13. Dispositif électronique comprenant un contrôleur configuré pour mettre en oeuvre un procédé selon l'une quelconque des revendications précédentes.
